# EUROPÄISCHE PATENTSCHRIFT

(11) **EP 0 350 767 B1**
(45) Veröffentlichungstag und Bekanntmachung des Hinweises auf die Patenterteilung: **31.03.1993**
(21) Anmeldenummer: 89112168.3
(22) Anmeldetag: 04.07.1989
(51) Int. Cl.: H04N 3/195, H04N 3/185, H01F 31/04, H01F 19/02

(54) **Tonwicklung über Luftspalt**
Audio winding bridging an air gap
Enroulement audio sur entrefer à air

(30) Priorität: 15.07.1988 DE 3824037
(43) Veröffentlichungstag der Anmeldung: 17.01.1990
(73) Patentinhaber: Deutsche Thomson-Brandt GmbH, 78003 Villingen-Schwenningen (DE)
(72) Erfinder: Hartmann, Uwe, D-8391 Untergriesbach (DE); Weisser, Erich, D-7733 Mönchweiler (DE)

(56) Entgegenhaltungen:
- EP-A- 0 243 738
- EP-A- 0 253 978
- US-A- 4 227 125
- US-A- 4 321 514
- US-A- 4 692 852

## Beschreibung

Die vorliegende Erfindung betrifft einen Transformator für ein Schaltnetzteil insbesondere für ein Schaltnetzteil in Fernsehempfängern. Schaltnetzteile werden in zunehmendem Maße in elektronischen Geräten, wie z.B. in Fernsehempfängern oder Videorecordern und dergleichen verwendet. Diese erzeugen aus einer ungeregelten, gleichgerichteten Netzwechselspannung eine oder mehrere geregelte Betriebsgleichspannungen und sorgen für die notwendige galvanische Trennung des Gerätes vom Netz. Zwecks enger Verkopplung der mit dem Netz verbundenen Primärwicklung mit den Sekundärwicklungen sind diese in Kammern eines Spulenkörpers verteilt und verschachtelt angeordnet.

In einem Fernsehempfänger enthält der Transformator neben den Sekundärwicklungen, die eine sehr stabile Betriebsspannung z.B. für die Zeilenendstufe liefern auch eine Sekundärwicklung z. B. für die Tonendstufe, welche sehr unterschiedliche Belastungen für diese Wicklung bildet, die sich je nach eingestellter Lautstärke des Gerätes zwischen den Werten 0 und 10 Watt ergeben. Diese starken Schwankungen können sich auf die übrigen Betriebsspannungen nachteilig auswirken.

Um diesen Nachteil zu vermeiden, ist ein Schaltnetzteil mit einem Transformator bekannt (US-A-4,692,852), das mehrere sekundäre Betriebsspannungen erzeugt, von denen eine größeren Lastschwankungen unterworfen ist. Damit diese Lastschwankungen keine Rückwirkungen auf andere Betriebsspannungen haben, die z.B. die Horizontalablenkung oder die Hochspannung in einem Fernsehempfänger im Rhythmus der Lastschwankungen z.B. einer Audioendstufe beeinflussen, ist eine Kompensationswicklung auf dem Kern des Transformators vorgesehen, von der eine Spannung zum Ausgleich an die Regelschaltung des Schaltnetzteils abnehmbar ist. Hierbei befindet sich die Sekundärwicklung für die Tonendstufe zwar auch über dem Luftspalt, aber in gleicher Weise auch die anderen Sekundärwicklungen, so daß der Luftspalt in gleichem Maße auf sämtliche Wicklungen Einfluß nimmt und nicht bevorzugt auf eine ausgewählte.

Der Erfindung liegt die Aufgabe zugrunde, die Wirkung dieser Lastschwankungen auf die anderen Betriebsspannungen unter Vermeidung eines größeren Schaltungsaufwandes weitestgehend zu unterbinden. Die Aufgabe wird durch die im Patentanspruch angegebene Maßnahme gelöst.

Nachfolgend wird die Erfindung mit Hilfe der Zeichnung an einem Ausführungsbeispiel erläutert.
- Figur 1: zeigt den prinzipiellen Aufbau eines Schaltnetzteils
- Figur 2: zeigt den konstruktiven Aufbau des angemeldeten Transformators
- Figur 3: zeigt einen Schnitt durch die Darstellungen nach Figur 2.

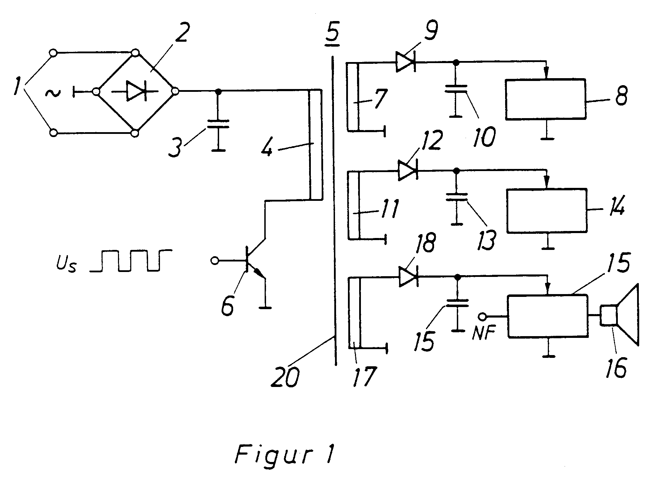

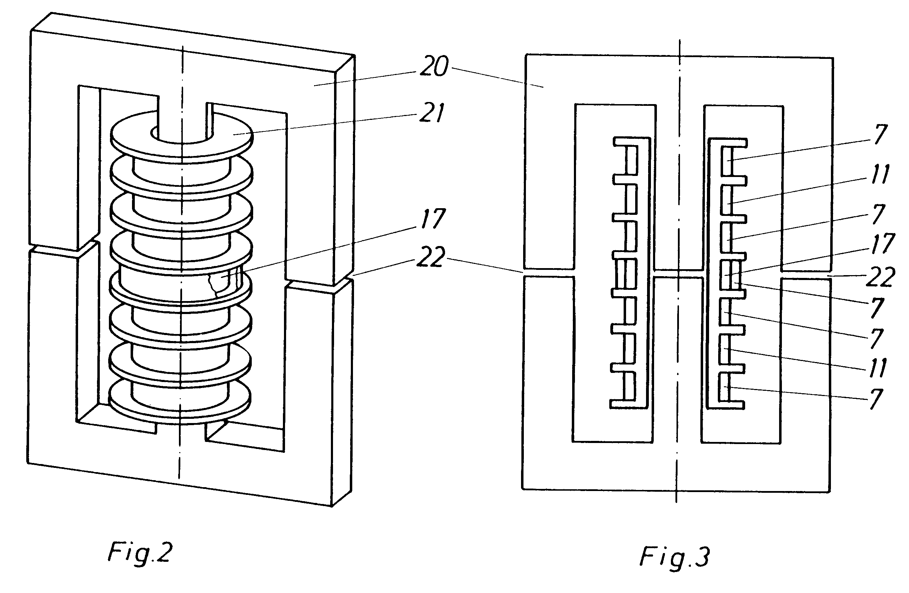

In Figur 1 ist das Wesentliche eines Schaltnetzteils dargestellt. Eine an die Klemmen 1 gelegte Netzwechselspannung wird mit Hilfe eines Brückengleichrichters 2 gleichgerichtet und es bildet sich eine noch ungeregelte Gleichspannung UB am Kondensator 3 aus. Diese Gleichspannung UB ist an das eine Ende einer Primärwicklung 4 eines Schaltnetzteiltransformators 5 gelegt, deren anderes Ende über einen elektronischen Schalter 6 nach Massepotential schaltbar ist. Der elektronische Schalter 6 wird mit Hilfe von Ansteuerimpulsen Us periodisch durchgeschaltet, welche in ihrer Breite zwecks Stabilisierung der erzeugten sekundärseitigen Gleichspannungen moduliert sind. Auf der Sekundärseite befinden sich Sekundärwicklungen, von denen die Sekundärwicklung 7 z.B. zur Speisung einer Zeilenendstufe 8 dient, deren Spannung über die Diode 9 an einen Kondensator 10 erzeugt wird. Weitere Sekundärwicklungen z.B. die Sekundärwicklung 11 liefert über die Diode 12 an einem Kondensator 13 die Betriebsspannung für weitere Stufen, z.B. für die Videoendstufe 14. Zwecks Stromversorgung einer Tonendstufe 15 zur Speisung eines Lautsprechers 16 dient die Sekundärwicklung 17, welche die Betriebsspannung über die Diode 18 an dem Kondensator 19 erzeugt. Die Primärwicklung 4 sowie die Sekundärwicklungen 7, 11 und 17 sind auf dem Transformatorkern 20 in einem Mehrkammerspulenkörper 21 verschachtelt angeordnet, wie in Figur 2 dargestellt. Die Sekundärwicklung 17 für die Versorgung der Tonendstufe 15 ist wie angedeutet direkt über dem Luftspalt 22 des Kerns 20 angeordnet. In Figur 3 ist nochmals in einem Schnitt die Lage dieser Wicklung 17 dargestellt. Diese Wicklung ist von den übrigen Wicklung stark entkoppelt und die aus dieser gewonnene Betriebsspannung ist dadurch stark lastabhängig. Mit dieser Anordnung lassen sich Unterschiede von Musik- zu Sinusleistungen im Verhältnis 4:1 leicht beherrschen. Durch die vorhandene durch den Luftspalt bedingte Streuinduktivität ist der Innenwiderstand der Tonendstufenversorgung angepasst, ohne daß eine zusätzliche Verlustleistung in Kauf genommen werden muß. Bei geringeren Unterschieden von Musik- zu Sinusleistung kann die Kopplung zwischen den Wicklungen enger dadurch gemacht werden, indem ein Teil der Wicklung 7 für die Versorgung der Zeilenendstufe 8 in der Kammer für die Wicklung 17 der Tonendstufe 15 untergebracht ist.

Die Erfindung wurde am Beispiel eines Transformators mit einem Doppel-E-Kern beschrieben. Es liegt jedoch im Rahmen der Erfindung, wenn eine andere Kernform verwendet wird, z.B. ein E-I-Kern. Wesentlich ist hierbei, daß die Tonwicklung über dem Luftspalt des Kerns angeordnet ist.

## Patentansprüche

1. Transformator für ein Schaltnetzteil in einem Fernsehempfänger mit einem Kern und einem Kammerspulenkörper mit einer Primärwicklung sowie mindestens zwei Sekundärwicklungen, welche sich über dem Luftspalt des Kerns befinden und von denen eine zur Erzeugung der Betriebsspannung für die Tonendstufe dient, **dadurch gekennzeichnet,** daß die Sekundärwicklung (17) für die Tonendstufe (15) in einer Kammer des Spulenkörpers (21) angeordnet ist, die sich über dem Luftspalt (22) des Kerns (20) befindet und daß die Breite der Sekundärwicklung (17) für die Tonendstufe (15) kleiner als die Breite der restlichen Sekundärwicklungen gewählt ist, damit der Luftspalt (22) die Sekundärwicklung (17) für die Tonendstufe (15) bevorzugt beeinflußt, während die restlichen Sekundärwicklungen von dem Luftspalt (22) dementsprechend weniger beeinflußt werden.

2. Transformator nach Anspruch 1, **dadurch gekennzeichnet**, daß die restlichen Sekundärwicklungen (7, 11) neben der Wicklung (17) in Kammern angeordnet sind.

3. Transformator nach Anspruch 1, **dadurch gekennzeichnet**, daß die restlichen Wicklungen (7, 11) rechts und links von der Wicklung (17) in Kammern angeordnet sind.

4. Transformator nach Anspruch 1, **dadurch gekennzeichnet,** daß ein Teil einer weiteren Sekundärwicklung (7) des Transformators (5) in der Kammer über dem Luftspalt (22) zusammen mit der Wicklung (17) angeordnet ist.

## Claims

1. Transformer for a switched-mode power supply in a television receiver with a core and a compartmentalized coil form with a primary winding and at least two secondary windings, which are located above the air gap of the core and one of which serves for generating the operating voltage for the sound output stage, **characterised in that** the secondary winding (17) for the sound output stage (15) is arranged in a compartment of the coil form (21) which is located above the air gap (22) of the core (20) and that the width of the secondary winding (17) for the sound output stage (15) is selected to be smaller than the width of the remaining secondary windings, so that the air gap (22) mainly influences the secondary, winding (17) for the sound output stage (15), while the remaining secondary windings are accordingly less influenced by the air gap (22).

2. Transformer according to claim 1, **characterised in that** the remaining secondary windings (7, 11) are arranged next to the winding (17) in compartments.

3. Transformer according to claim 1, **characterised in that** the remaining windings (7, 11) are arranged to the right and left of the winding (17) in compartments.

4. Transformer according to claim 1, **characterised in that** a part of a further secondary winding, (7) of the transformer (5) is arranged in the compartment above the air gap (22) together with the winding (17).

## Revendications

1. Transformateur pour un bloc d'alimentation et de commutation dans un récepteur de télévision avec un noyau et un corps de bobine à compartiments avec un enroulement primaire ainsi qu'avec au moins deux enroulements secondaires qui se trouvent sur l'entrefer du noyau et parmi lesquels l'un d'eux sert à produire la tension de fonctionnement pour l'étage de sortie audio, **caractérisé en ce** que l'enroulement secondaire (17) pour l'étage de sortie audio (15) est placé dans un compartiment du corps de bobine (21) qui se trouve sur l'entrefer (22) du noyau (20) et que la largeur de l'enroulement secondaire (17) pour l'étage de sortie audio (15) est choisie plus petite que la largeur du reste des enroulements secondaires pour que l'entrefer (22) influence de manière préférentielle l'enroulement secondaire (17) pour l'étage de sortie audio (15) tandis que le reste des enroulements secondaires est en conséquence moins influencé par l'entrefer (22).

2. Transformateur selon la revendication 1, **caractérisé en ce** que le reste des enroulements secondaires (7, 11) est disposé à côté de l'enroulement (17) dans des compartiments.

3. Transformateur selon la revendication 1, **caractérisé en ce** que le reste des enroulements (7, 11) est placé à droite et à gauche de l'enroulement (17) dans des compartiments.

4. Transformateur selon la revendication 1, **caractérisé en ce** qu'une partie d'un autre enroulement secondaire (7) du transformateur (5) est placé dans le compartiment sur l'entrefer à air (22) avec l'enroulement (17).
